# EUROPÄISCHE PATENTSCHRIFT

(11) **EP 2 328 765 B1**
(45) Veröffentlichungstag und Bekanntmachung des Hinweises auf die Patenterteilung: **17.04.2013**
(21) Anmeldenummer: 09777133.1
(22) Anmeldetag: 11.07.2009
(51) Int. Cl.: B60G 17/0195, B60G 17/018, B60G 17/04

(54) **VERFAHREN ZUR NIVEAUREGULIERUNG BEI EINEM KRAFTFAHRZEUG**
METHOD FOR LEVEL CONTROL IN A MOTOR VEHICLE
PROCÉDÉ POUR RÉGLER LA HAUTEUR DE CAISSE D UN VÉHICULE À MOTEUR

(30) Priorität: 01.08.2008 DE 102008036041
(43) Veröffentlichungstag der Anmeldung: 08.06.2011
(73) Patentinhaber: Bayerische Motoren Werke Aktiengesellschaft, 80809 München (DE)
(72) Erfinder: BITTER, Thorsten, 80638 München (DE); THASLER, Henry, 86415 München (DE)
(86) Internationale Anmeldenummer: PCT/EP2009/005054
(87) Internationale Veröffentlichungsnummer: WO 2010/012369

(56) Entgegenhaltungen:
- DE-A1- 2 909 441
- DE-A1-102005 018 434
- US-A- 5 046 754
- US-A- 5 091 679
- US-B1- 7 338 335

## Beschreibung

Die Erfindung betrifft ein Verfahren zur (automatischen) Niveauregulierung bei einem Kraftfahrzeug gemäß dem Oberbegriff des Anspruchs 1. Dabei erfolgt die Niveauregulierung durch Ansteuerung einer die Federelemente der Radaufhängungen beeinflussenden (elektrische betriebenen) Aktuatoreinrichtung, deren Betrieb einen Einfluss auf das elektrische Bordnetz des Kraftfahrzeugs hat. Beispielsweise kann die Aktuatoreinrichtung bzw. ein Aktuator als pneumatische oder hydropneumatische Feder ausgebildet sein, welche durch einen als Kompressor oder als Hydraulikpumpe ausgebildeten Aktuator verstellbar ist, so dass durch den Betrieb eines derartigen strombetriebenen Aktuators eine entsprechende Belastung des elektrischen Bordnetzes erfolgt.

Aus der DE 10 2005 018 434 A1 ist ein Verfahren nach dem Oberbegriff des Anspruchs 1 zumindest implizit bekannt. Grundsätzlich bekannt ist es dabei, die Auslastung bzw. den aktuellen elektrischen Auslastungszustand bzw. -grad eines elektrischen Bordnetzes (bzw. Kraftfahrzeugbordnetzes) zu berücksichtigen, wobei Steuer- oder Regeleingriffe, wie sie insbesondere bei einem Anlauf von Hochstromverbrauchern, wie den elektrisch betriebenen Aktuatoren zur Verstellung der Federelemente bei einem Kraftfahrzeug, auftreten, abhängig vom Zustand des elektrischen Bordnetzes erfolgen können.

Der vorliegenden Erfindung liegt die Aufgabe zugrunde, ein Verfahren zur Niveauregulierung einem Kraftfahrzeug anzugeben, durch weiches der Fahrkomfort und/oder die Sicherheit im Hinblick auf einen zuverlässigen Betrieb des Kraftfahrzeugs verbessert wird/werden.

Erfindungsgemäß wird die Aufgabe durch die Gesamtheit der Merkmale des Anspruchs 1 gelöst, während in den Unteransprüchen bevorzugte Weiterbildungen der Erfindung angegeben sind. Gemäß der Erfindung erfolgt die Ansteuerung eines Aktuators zur Verstellung eines Federelements zur Niveauregulierung des Fahrzeugs (zu regelnder Abstand des Fahrzeugs zur Fahrbahnoberfläche) in Abhängigkeit von zumindest zwei Betriebsparametern, wobei einer der Betriebsparameter mit dem Zustand (Betriebszustand, Auslastung, ...) des elektrischen Kraftfahrzeugbordnetzes korreliert und ein zweiter Betriebsparameter den aktuellen Fahrzeughöhensiand (oder sog. aktuelle Bodenfreiheit) repräsentiert. Dabei kann der den aktuellen Fahrzeughöhenstand repräsentierende Betriebsparameter beispielsweise ein Zustandsparameter des zu verstellenden Federelementes (z.B. Sensorsignal der aktuellen Verstellposition des Federlementes) sein oder in Form eines den tatsächlichen Fahrzeughöhenstand des Fahrzeugs (bzw. den Abstand des Fahrzeugbodens zur Fahrbahn) wiedergebenden Sensorsignals ausgebildet sein. Die Auslastung bzw. der Zustand des Bordnetzes kann durch einen Betriebsparameter (analog zur elektrischen Leistungsentnahme) abgebildet werden, der z.B. den aktuellen gesamten Laststrom (ggf. i.V. mit der aktuelle Bordnetzspannung) abbildet und/oder der eine Information über die Anzahl und die Art der aktivierten elektrisch betriebenen Verbraucher widerspiegelt.

In einer besonders bevorzugten Weiterbildung der Erfindung erfolgt die Ansteuerung des (bzw. jedes) Aktuators in Abhängigkeit von einem zusätzlichen dritten Betriebsparameter. Dabei gibt der dritte Betriebsparameter insbesondere die zusätzliche Information, ob die Brennkraftmaschine zur Erzeugung des auf die Antriebsräder wirkenden Antriebsmoments sich in einem aktivierten Betriebszustand (Brennkraftmaschine "läuft") oder in einem deaktivierten Betriebszustand (Brennkraftmaschine ist gestoppt - Zündung und/oder Kraftstoffzufuhr sind deaktiviert) befindet. Dies ist von entsprechender Relevanz, da bei aktivierter Brennkraftmaschine das Bordnetz über einen riemengetriebenen Generator in der Regel zusätzlich gestützt wird und daher eine Belastung des elektrischen Bordnetzes durch eine gewünschte oder erforderliche Niveauregulierung höher ausfallen darf.

Mit Vorteil findet das erfindungsgemäße Verfahren bei einem so genannten Hybridfahrzeug mit einer elektrischen Maschine zur Erzeugung eines auf die Antriebsräder wirkenden Antriebsmoments Verwendung. Bei derartigen Fahrzeugen ist in der Regel kein zusätzlicher Generator zur Versorgung des Bordnetzes bzw. zur Aufladung des Bordnetz-Energiespeichers vorgesehen - dies erfolgt in der Regel über die sowohl generatorisch als auch motorisch betreibbare elektrische (Antriebs-)Maschine - so dass eine elektrische Belastung durch eine plötzlich eingreifende Niveauregelung erheblichen Einfluss auf den Bordnetzzustand haben kann. In diesem Fall erfolgt die Ansteuerung des Aktuators - alternativ oder zusätzlich zu dem vorstehend beschriebenen dritten Betriebsparameter (Betriebszustand der Brennkraftmaschine) - in Abhängigkeit vom Betriebszustand der elektrischen Maschine.

Mit Vorteil wird ferner ein Startzeitpunkt ermittelt, zu dem die Funktion der Niveauregulierung automatisch gestartet wird. Dies erfolgt mit Vorteil in Abhängigkeit vom Zustand des Bordnetzes.

Der Zeitpunkt, zu dem im Rahmen der aktiven Niveauregelung der Aktuator zur Verstellung des/jedes Federlementes angesteuert wird, ist dabei abhängig von dem aktuellen Fahrzeughöhenstand des Kraftfahrzeugs (insbesondere abhängig von dem im Startzeitpunkt der Niveauregelung vorliegenden Fahrzeughöhenstand) bzw. dem damit einhergehenden Verstellzustand des zu verstellenden Federlements.

Über die Niveauregulierung soll in Abhängigkeit von dem aktuellen Fahrzeughöhenstand und in Abhängigkeit vom Motorlauf der Brennkraftmaschine (hohe Drehzahl / niedrige Drehzahl; Motor ein / Motor aus; ...) die Aktivierung des Aktuators (bzw. die Aktivierung des Kompressors oder der Hydraulikpumpe - je nach Ausführung der Niveauregulierung) gänzlich unterbunden oder zeitlich verzögert werden. Bereits begonnene Ansteuerungen werden nicht unterbrochen. Dabei wird die Ansteuerung des Aktuators bzw. dessen Anlaufverzögerung in Abhängigkeit vom Erreichen (erreicht haben) oder Nicht-Erreichen (bzw. nicht erreicht haben) vorbestimmter Höhenstandsgrenzen aktiviert. Ist der aktuell ermittelte Höhenstand des Kraftfahrzeugs (ausgehend von einer vorbestimmten Normallage) unterhalb der Normallage (H0) aber noch oberhalb einer vorbestimmten ersten Höhenstandsgrenze (H1), erfolgt die Ansteuerung des Aktuators mit einer ersten (längeren) Verzögerungszeit (T1).

Befindet sich der aktuell ermittelte Höhenstand des Kraftfahrzeugs unterhalb der vorbestimmten ersten Höhenstandsgrenze (H1) aber noch oberhalb einer vorbestimmten zweiten Höhenstandsgrenze (H2), erfolgt die Ansteuerung des Aktuators mit einer zweiten (im Vergleich zur ersten Verzögerungszeit (T1) verkürzten) Verzögerungszeit (T2).

Wird schließlich ein Höhenstand des Kraftfahrzeugs ermittelt, welcher sich unterhalb eines unteren vorbestimmten Mindesthöhenstands befindet - der vorbestimmte Mindesthöhenstand kann z.B. der zweiten Höhenstandsgrenze (H2) entsprechen-, erfolgt die Ansteuerung des Aktuators mit Vorteil unverzögert.

Wird als zusätzlicher Betriebsparameter der Betriebszustand der Brennkraftmaschine hinzugezogen, so kann die ermittelte Verzögerungszeit in Abhängigkeit vom Betriebszustand der Brennkraftmaschine auch verändert werden. Bei aktivierter Brennkraftmaschine ist dann eine verkürzte Verzögerungszeit vorgesehen, im Vergleich zu einer bei deaktivierter Brennkraftmaschine vorgesehenen Verzögerungszeit.

Ein Ausführungsbeispiel der Erfindung ist in der Zeichnung dargestellt und wird im Folgenden näher beschrieben. Es zeigen:
- Figur 1:: ein Funktionsbild bzw. einen Ablaufplan zur Veranschaulichung des erfindungsgemäßen Verfahren, und
- Figur 2:: ein Diagramm zur Darstellung des Ansteuer- bzw. Regelungsbedarfs in Abhängigkeit von dem Fahrzeughöhenstand bzw. in Abhängigkeit von dem Fahrzeughöhenstand und dem Betriebszustand der Brennkraftmaschine.

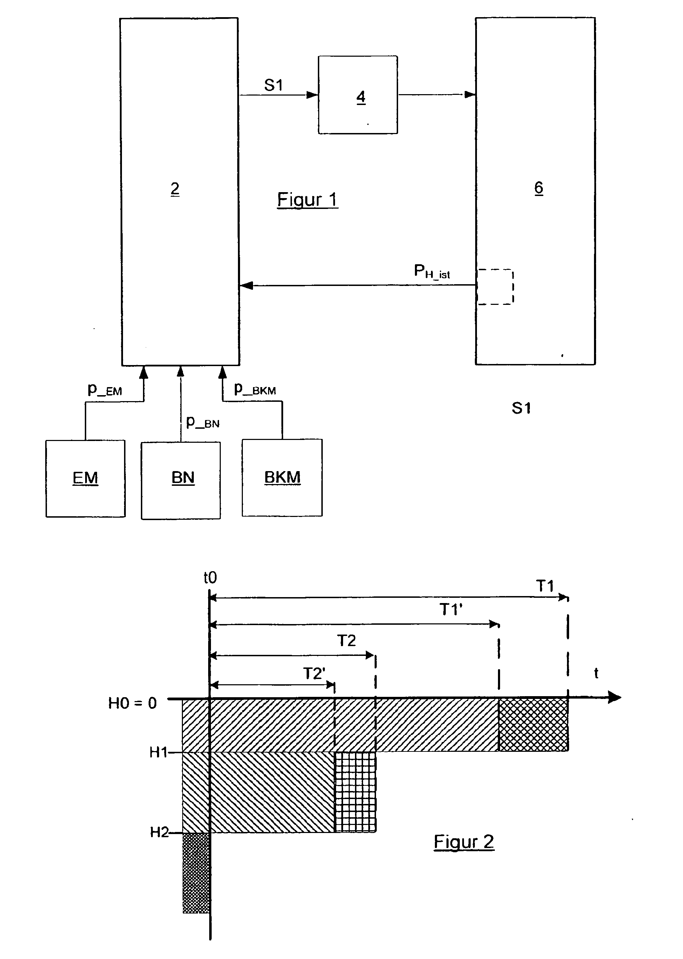

Figur 1 zeigt in schematischer Darstellung ein Funktionsschaltbild zur Veranschaulichung des erfindungsgemäßen Verfahrens. Gemäß Figur 1 wird über eine Steuereinrichtung 2 zur Umsetzung des erfindungsgemäßen Verfahrens ein Aktuator 4 zur (Höhenstands-)Verstellung eines Federelements 6 angesteuert. Dabei wird von der Steuereinrichtung 2 in Abhängigkeit von Betriebsparametern p ein Ansteuersignal S1 zur Ansteuerung des Aktuators 4 generiert. In der dargestellten Ausführungsform umfassen die Betriebsparameter p dabei einen den Zustand des elektrischen Bordnetzes BN widerspiegelnden Betriebsparameter p_{BN} (z.B. Anzahl und Art der aktivierten bzw. in kürze zu aktivierenden elektrischen Verbraucher, Ladezustand des/der elektrischen Energiespeicher(s), Auslastungsgrad, abgegebene Leistung, Leistungsabgabe hat bestimmten Grenzwert erreicht oder überschritten), einen den aktuellen Fahrzeughöhenstand Hᵢₛₜ repräsentierenden Betriebsparameter pₕ_ᵢₛₜ (Signalwert eines Weg- bzw. Höhenstandssensors oder dergleichen), einen den Betriebszustand der Brennkraftmaschine BKM abbildenden Betriebsparameter p_{BKM} (Motor befeuert, bereitgestelltes bzw. angefordertes Antriebsmoment, Drehzahl, Gangstufe, ...) sowie einen den Betriebszustand einer optional vorhandenen elektrischen Maschine EM abbildenden Betriebsparameter p_{EM} (z.B. erzeugtes Antriebsmoment, Motorstrom, Leistungsaufnahme und/oder Leistungsabgabe im Generatorbetrieb, Auslastungsgrad).

In Figur 2 wird die Funktionsweise des erfindungsgemäßen Verfahrens anhand eines Zeit-Höhenstand-Diagramms veranschaulicht. Auf Höhe der X-Achse liegend (y=H0=0) wird der gewünschte Soll-Höhenstand des Fahrzeugs bzw. der gewünschte Fahrzeughöhenstand mit H0 (H0=0 bzw. ohne Abweichung vom Sollwert) angenommen.

Ausgehend von dem gewünschten Fahrzeughöhenstand H0, werden Abweichungen, bei denen das Fahrzeug bis zu einer Abweichung von einem ersten Grenz-Fahrzeughöhenstand H1 abgesenkt ist bzw. sich unterhalb des vorgegebenen gewünschten Fahrzeughöhenstands H0 befindet, mit einer vorbestimmten Verzögerungszeit T1 nach Detektion des Fahrzeughöhenstands Hᵢₛₜ auf den vorgegebenen Fahrzeughöhenstand H0 eingeregelt. Sollte sich das Fahrzeug innerhalb dieser Verzögerungszeit T1 allerdings weiter unter den Grenz-Fahrzeughöhenstand H1 absenken, würde die Verzögerungszeit T1 auf eine verkürzte Verzögerungszeit T2 (mit T2<T1) gesetzt und der Regelungsvorgang entsprechend früher eingeleitet.

Befindet sich der Ist-Fahrzeughöhenstand Hᵢₛₜ im Zeitpunkt der Detektion (t=0) in einem Bereich unterhalb des ersten Grenz-Fahrzeughöhenstands H1, aber nicht unterhalb eines zweiten vorbestimmten Grenzfahrzeughöhenstands H2 (mit im Vergleich zum Fahrzeughöhenstand H1 geringerem Fahrzeughöhenstand - d.h. näher am Fahrbahnboden) wird das Fahrzeug mit der im Vergleich zur ersten Verzögerungszeit T1 verkürzten vorbestimmten Verzögerungszeit T2 auf den vorgegebenen Fahrzeughöhenstand H0 eingeregelt.

In beiden Fällen wird, gesetzt den Fall, dass der Fahrzeughöhenstand Hᵢₛₜ innerhalb der Verzögerungszeit (T1; T2) einen zweiten Grenz-Fahrzeughöhenstand H2 (mit H2<H1 <H0) unterschreitet, unmittelbar die Regelung auf den gewünschten Soll-Fahrzeughöhenstand eingeleitet.

Darüber hinaus wird bei den beschriebenen Regelungsvorgängen bzw. bei der beschrieben Fahrzeug-Niveauregulierung zwischen dem Fahrzeugbetriebszustand mit aktivierter und mit deaktivierter Brennkraftmaschine unterschieden. Gelten die dargestellten Verzögerungszeiten T1; T2 für einen Fahrzeugbetriebszustand mit deaktivierter Brennkraftmaschine BKM, so würden diese bei laufender (aktivierter) Brennkraftmaschine entsprechend auf die dargestellten Verzögerungszeiten T1' bzw. T2' verkürzt.

Die ungewollte Absenkung des Fahrzeugs, ausgehend von einem gewünschten Fahrzeughöhenstand H0, in Höhenstandsbereiche bis H1, oder gar bis oder unterhalb von H2 haben unterschiedliche Regelungsstartzeitpunkte zur Folge. Derartige ungewollte Fahrzeugabsenkungen ergeben sich vor allem durch Beladung eines stehenden Fahrzeugs, Temperaturänderungen im Feder- bzw. Aktuatorelement, Auftriebsänderungen durch wechselnde Fahrgeschwindigkeit sowie Diffusion und Leckage aus der Aktuatoreinrichtung zur Niveauregulierung.

Durch das erfindungsgemäße Verfahren wird insbesondere die Stabilität des elektrischen Bordnetzes verbessert. Darüber hinaus kann eine höhere Verfügbarkeit der kundenrelevanten Fahrwerksregel- und Komfortfunktionen gewährleistet werden. Schließlich ist diese Funktionalität ohne zusätzlichen Hardwareaufwand in bereits bestehende Fahrzeugkonzepte implementierbar.

## Patentansprüche

1. Verfahren zur Niveauregulierung bei einem Kraftfahrzeug, wobei durch Ansteuerung von zumindest einem Aktuator (4) ein vorbestimmter Fahrzeughöhensland (HO) einstellbar ist, wobei die Ansteuerung des Aktuators (4) in Abhängigkeit von einem ersten, mit dem elektrischen Zustand des elektrischen Bordnetzes (BN) korrelierenden Betriebsparameter (p_{BN)} und in Abhängigkeit von einem zweiten, den Fahrzeughöhenstand (Hᵢₛₜ) repräsentierenden Betriebsparameter (p_{H}_ᵢₛₜ) erfolgt,
**dadurch gekennzeichnet, dass** die Ansteuerung des Aktuators (4) für den Fall, dass der aktuelle Fahrzeughöhenstand (Hᵢₛₜ) geringer als der vorbestimmte Fahrzeughöhenstand (HO) und nicht gleich oder geringer einem vorbestimmten zweiten Fahrzeug-Grenzhöhenstand (H2) ist, um eine vorbestimmte Zeitdauer (T1, T1'; T2, T2') verzögert erfolgt, während die Ansteuerung des Aktuators unverzögert erfolgt, falls der aktuelle Fahrzeughöhenstand (Hᵢₛₜ) gleich oder geringer einem vorbestimmten zweiten Fahrzeug-Grenzhöhenstand (H2) ist.

2. Verfahren nach Anspruch 1,
**dadurch gekennzeichnet, dass** die Ansteuerung des Aktuators (4) bei einem aktuellen Fahrzeughöhenstand (Hᵢₛₜ), welcher geringer als der vorbestimmte Fahrzeughöhenstand (H0) ist und welcher nicht geringer einem vorbestimmten ersten Grenz-Fahrzeughöhenstand (H1) ist, um eine vorbestimmte erste Zeitdauer (T1, T1') verzögert erfolgt, während die Ansteuerung des Aktuators (4) bei einem aktuellen Fahrzeughöhenstand (Hᵢₛₜ), welcher geringer ist als der vorbestimmte erste Grenz-Fahrzeughöhenstand (H1) und welcher nicht geringer einem vorbestimmten zweiten Grenz-Fahrzeughöhenstand (H2) ist, um eine vorbestimmte zweite Zeitdauer (T2, T2') verzögert erfolgt, die kürzer ist als die vorbestimmte erste Zeitdauer (T1, T1').

3. Verfahren nach einem der vorhergehenden Ansprüche,
**dadurch gekennzeichnet, dass** die Ansteuerung des Aktuators (4) in Abhängigkeit von einem dritten, den Betriebszustand einer Brennkraftmaschine (BKM) repräsentierenden Betriebsparameter (p_{BKM}) erfolgt, wobei die Zeitdauer (T1, T1'; T2, T2'), um die die Aktivierung des Aktuators (4) verzögert wird, in Abhängigkeit vom Betriebszustand der Brennkraftmaschine (BKM) variiert wird.

4. Verfahren nach Anspruch 3,
**dadurch gekennzeichnet, dass** im Hinblick auf den Betriebszustand ausschließlich zwischen aktivierter und deaktivierter Brennkraftmaschine (BKM) unterschieden wird.

5. Verfahren nach Anspruch 4,
**dadurch gekennzeichnet, dass** die Ansteuerung des Aktuators (4) bei aktivierter Brennkraftmaschine (BKM) mit einer im Vergleich zum Betriebszustand bei deaktivierter Brennkraftmaschine (BKM) verkürzten Zeitdauer (T1'; T2') erfolgt.

6. Verfahren nach einem der vorhergehenden Ansprüche,
**dadurch gekennzeichnet, dass** das Kraftfahrzeug neben einer Brennkraftmaschine (BKM) zur Erzeugung von auf zumindest ein Antriebsrad und/oder auf einen Generator wirkenden Antriebsmoment eine elektrische Maschine (EM) zur Erzeugung von auf zumindest ein Antriebsrad wirkenden Antriebsmoment umfasst, und die Ansteuerung des Aktuators (4) in Abhängigkeit von dem den Betriebszustand der elektrischen Maschine (EM) repräsentierenden Betriebsparameter (p_{EM})erfolgt.

7. Verfahren nach einem der vorstehenden Ansprüche,
**dadurch gekennzeichnet, dass** die Ermittlung des elektrischen Zustands des elektrischen Bordnetzes (BN) in Abhängigkeit von der aktuellen und/oder vergangenen und/oder zu erwartenden elektrischen Leistungsentnahme aus dem Bordnetz (BN) erfolgt.

8. Verfahren nach einem der vorstehenden Ansprüche,
**dadurch gekennzeichnet, dass** das Verfahren zur Niveauregulierung in Abhängigkeit von dem elektrischen Zustand des Bordnetzes (BN) automatisch aktiviert und/oder deaktiviert wird.

## Claims

1. A method for level control in a motor vehicle, wherein, by activating at least one actuator (4), a predetermined vehicle ride height (HO) can be adjusted, the activation of the actuator (4) taking place depending on a first operating parameter (p_{BN}) correlating with the electrical state of the vehicle electrical system (BN) and depending on a second operating parameter (P_{H}__{actual}) representing the vehicle ride height (H_{actual}), **characterised in that** the activation of the actuator (4), if the current vehicle ride height (H_{actual}) is less than the predetermined vehicle ride height (HO) and is not equal to or less than a predetermined second vehicle limit ride height (H2), takes place delayed by a predetermined time period (T1, T1'; T2, T2'), while the activation of the actuator takes place without delay, if the current vehicle ride height (H_{actual}) is equal to or less than a predetermined second vehicle limit ride height (H2).

2. A method according to claim 1, **characterised in that** the activation of the actuator (4), at a current vehicle ride height (H_{actual}), which is less than the predetermined vehicle ride height (HO) and is not less than a predetermined first limit vehicle ride height (H1), is delayed by a predetermined first time period (T1, T1'), while the activation of the actuator (4) at a current vehicle ride height (H_{actual}), which is less than the predetermined first limit vehicle ride height (H1) and is not less than a predetermined second limit vehicle ride height (H2), is delayed by a predetermined second time period (T2, T2'), which is shorter than the predetermined first time period (T1, T1')

3. A method according to any one of the preceding claims, **characterised In that** the activation of the actuator (4) takes place depending on a third operating parameter (p_{BKM}) representing the operating state of an internal combustion engine (BKM), the time period (T1, T1'; T2, T2'), by which the activation of the actuator (4) is delayed, being varied depending on the operating state of the internal combustion engine (BKM).

4. A method according to claim 3, **characterised in that** with regard to the operating state, a distinction is exclusively made between an activated and a deactivated internal combustion engine (BKM).

5. A method according to claim 4, **characterised in that** the activation of the actuator (4), when the internal combustion engine (BKM) is activated, takes place in a time period (T1'; T2') that is shortened in comparison to the operating state when the internal combustion engine (BKM) is deactivated.

6. A method according to any one of the preceding claims, **characterised in that** the motor vehicle, apart from an internal combustion engine (BKM) for producing a drive torque acting on at least one drive wheel and/or on a generator, comprises an electric engine (EM) to produce a drive torque acting on at least one drive wheel, and the activation of the actuator (4) takes place depending on the operating parameter (p_{EM}) representing the operating state of the electric engine (EM).

7. A method according to any one of the preceding claims, **characterised in that** the electrical state of the vehicle electrical system (BN) is determined depending on the current and/or past electric power consumption and/or that to be expected from the vehicle electrical system (BN).

8. A method according to any one of the preceding claims, **characterised in that** the method for level control is automatically activated and/or deactivated depending on the electrical state of the vehicle electrical system (BN).

## Revendications

1. Procédé de régulation de la hauteur de caisse d'un véhicule selon lequel, par la commande d'au moins un actionneur (4) on peut régler une hauteur de caisse (HO) du véhicule prédéfinie, la commande de l'actionneur (4) s'effectuant en fonction d'un premier paramètre de fonctionnement (P_{BN}) en relation avec l'état électrique du réseau électrique embarqué (BN) et en fonction d'un second paramètre de fonctionnement (PH_ᵢₛₜ) représentant l'état de la hauteur de la caisse du véhicule (Hᵢₛₜ),
**caractérisé en ce que**
dans le cas où l'état de la hauteur actuel (Hᵢₛₜ) de la caisse du véhicule est inférieur à la hauteur de la caisse du véhicule (HO) prédéfinie et n'est pas égal ou inférieur à un second état de la hauteur de la caisse du véhicule limite (H2), la commande de l'actionneur (4) est temporisée pendant une durée prédéfinie (T1, T1' ; T2, T2') alors que la commande de l'actionneur s'effectue de manière non temporisée lorsque l'état de la hauteur de la caisse du véhicule actuel (Hᵢₛₜ) est égal ou inférieur au second état de la hauteur de la caisse du véhicule limite (H2).

2. Procédé conforme à la revendication 1,
**caractérisé en ce qu'**
en présence d'un état de la hauteur de la caisse du véhicule actuel (Hᵢₛₜ) inférieur à la hauteur de la caisse du véhicule prédéfinie (HO) et non inférieur à un premier état de la hauteur de la caisse du véhicule limite (H1), la commande de l'actionneur (4) est temporisée pendant une première durée prédéfinie (T1, T1') tandis qu'en présence d'un état de la hauteur de la caisse du véhicule actuel (Hᵢₛₜ) inférieur au premier état de la hauteur de la caisse du véhicule limite (H1) et non inférieur au second état de la hauteur de la caisse du véhicule limite (H2), la commande de l'actionneur (4) est temporisée pendant une seconde durée prédéfinie (T2, T2') qui est plus courte que la première durée prédéfinie (T1, T1').

3. Procédé conforme à l'une des revendications précédentes,
**caractérisé en ce que**
la commande de l'actionneur (4) s'effectue en fonction d'un troisième paramètre de fonctionnement (P_{BKM}) représentant l'état de fonctionnement du moteur (BKM), la durée (T1, T1' ; T2, T2') pendant laquelle l'activation de l'actionneur (4) est temporisée variant en fonction de l'état de fonctionnement du moteur (BKM).

4. Procédé conforme à la revendication 3,
**caractérisé en ce que**
concernant l'état de fonctionnement on différencie uniquement le moteur (BKM) activé et désactivé.

5. Procédé conforme à la revendication 4,
**caractérisé en ce que**
lorsque le moteur (BKM) est activé la commande l'actionneur (4) s'effectue avec une durée (T1', T2') plus courte que dans l'état de fonctionnement dans lequel le moteur (BKM) est désactivé.

6. Procédé conforme à l'une des revendications précédentes,
**caractérisé en ce que**
le véhicule est équipé, outre d'un moteur à combustion interne (BKM) pour l'obtention d'un couple d'entrainement agissant sur au moins une roue motrice et/ou sur un générateur, d'au moins un moteur électrique (EM) pour l'obtention d'un couple d'entrainement agissant sur au moins une roue motrice, et la commande de l'actionneur (4) s'effectue en fonction du paramètre de fonctionnement (P_{EM}) représentant l'état de fonctionnement du moteur électrique (EM).

7. Procédé conforme à l'une des revendications précédentes,
**caractérisé en ce que**
la détermination de l'état électrique du réseau électrique embarqué (BN) s'effectue en fonction du prélèvement de puissance électrique à partir du réseau embarqué (BN) actuel et/ou antérieur et/ou devant être attendu.

8. Procédé conforme à l'une des revendications précédentes,
**caractérisé en ce que**
le procédé de régulation de la hauteur de la caisse est automatiquement activé et/ou désactivé en fonction de l'état électrique du réseau embarqué (BN).
